(19) Europäisches Patentamt
European Patent Office
Office européen des brevets

(11) Publication number: **0 177 894 A2**

# (12) EUROPEAN PATENT APPLICATION

(21) Application number: **85112506.2**

(51) Int. Cl.⁴: **C 01 B 33/02**

(22) Date of filing: **03.10.85**

(30) Priority: **12.10.84 IT 2313684**

(43) Date of publication of application: **16.04.86 Bulletin 86/16**

(84) Designated Contracting States: **AT BE CH DE FR GB LI LU NL SE**

(71) Applicant: **SAMIM ABRASIVI S.p.A., Località Asola, I-38050 Scurelle Valsugana Trento (IT)**
Applicant: **PRAGMA S.p.A., Viale Brenta 29, I-20139 Milano (IT)**

(72) Inventor: **Fabris, Paolo, Viale Città di Prato 31, I-38051 Borgo Valsugana Trento (IT)**
Inventor: **Pirazzi, Renato, Via Piave 60, I-28037 Domodossola Novara (IT)**
Inventor: **Margadonna, Daniele, Via Degli Aceri 7, I-00040 Rocca Priora Roma (IT)**
Inventor: **Rustioni, Massimo, Via Petrorca 6, I-24033 Calusco d'Adda Bergamo (IT)**

(74) Representative: **Modiano, Guido et al, MODIANO, JOSIF, PISANTY & STAUB Modiano & Associati Via Meravigli, 16, I-20123 Milan (IT)**

## (54) Method of producing metallic silicon particularly for use in the photovoltaic industry.

(57) A method is disclosed for producing suitable silicon particularly for use in the manufacture of photovoltaic devices. The method consists of reducing quartz or quartzite with silicon carbide in a submerged arc furnace at a high temperature.

EP 0 177 894 A2

"METHOD OF PRODUCING METALLIC SILICON PARTICULARLY FOR USE IN THE PHOTOVOLTAIC INDUSTRY"

This invention relates to a process for obtaining metallic silicon by carbothermal reduction of quartz in an arc and resistance furnace, and more particularly, to a process for producing silicon particularly for use as raw material in the photovoltaic industry in the manufacture of solar cells.

It is recognized that the silicon employed in the manufacture of photovoltaic cells should be of a very high purity in order to convert effectively the solar energy into electric energy.

It is specially important that solar grade silicon should contain only small amounts of elements from the groups III and V of the Periodic Table of Elements, in particular of boron and phosphorus.

Also recognized is that commercially available metallurgical grade silicon has too high a content of impurities for use in the photovoltaic industry, and specifically of Fe,Al,Ca,B and P.

The silicon presently used to manufacture photovoltaic cells mostly comes from discarded electronic grade silicon which is, however, still so expensive as to forbid its use on a large scale.

Hence the need to develop new processes which afford, on the one side, the possibility of using simple and inexpensive technology, and on the other side, an end product which is utilizable by the photovoltaic industry.

In recent years, much effort has been made to accomplish the objective through different ways.

One of these consists of the chemical purification of metallurgical silicon by pyrometallurgical slagging processes, re. Italian Pat. Appl. No. 29622 A/78 of 9.11.1978 int. $Cl^3$ C01B 33/00, or hydrometallurgical processes, re. German Patent No. P 2722783.4 of 20.5.1977 int. cl. C01B, for example, whereby the metal impurity content consisting of transition elements can be lowered considerably, but not so the boron and phosphorus contents.

Also known from a further patent is to purify metallic silicon by a pyrometallurgical method which provides for the use of wet hydrogen, re. US Patent No. 4,097,584 of 27.6.1978, int. $Cl^2$ C01B 33/02, where it is stated that with that technique, metallic silicon with less than 1 ppm by weight of boron and phosphorus can be obtained. Tests carried out at our facilities have failed, however, to provide confirmation of the results related in this patent.

It is known, moreover, to provide physical purification through aluminothermy, re. US Patents No.s 4,193,975 of 18.3.1980 Int. $Cl^2$ B01J 17/20 and 4,195,067 of 25.3. 1980 Int $Cl^2$ C01B 33/02, which show an evident technical and economical difficulty in their industrial embodiment.

Known is also to develop the conventional method of carbothermally reducing silica, using arc and resistance furnaces and raw materials of a new type, such as, for example, carbon black, active carbons, siliceous sands, compacted colloidal silica with highly pure binders such as sucrose, polyvinyl alcohol,

cellulose, re. European Patent Application No. 28947 of 11.4. 1979, Int. Cl C01B/B01J/H01L, which discloses a process for obtaining metallic silicon which has been used to manufacture solar cells (through no better identified techniques), with conversion outputs in the 8.2 to 13.4% range (AM1). More recently, based on the aforesaid European Patent Applications 28947, a work has been disclosed whereby 4 $cm^2$ solar cells having circular cross-section can be obtained with an average conversion output of 13.7% (after two crystallizations with the CZ technique), or circular cross-section 78 $cm^2$ solar cells with an average conversion output of 11% (after two crystallizations with the Bridgman technique) starting from high purity silicon (HPMS) as obtained by carbothermal reduction in a submerged arc furnace rated at 100 kW and fed with rock quartz and nodules of carbon black either alone or as additivated to granulated quartzs linked with sucrose (re. J.A.Amick et al., Proc. of 4th Symp. on Mat. and New Techn. for Phot. PV-83-11, (1983) published by The Electrochemical Soc. Inc. Pennington, N.J. page 67, and J.A.Amick et al. Proc. of 5th Phot. Solar Energy Conf., Athenes, 1983, p. 1068).

However, there exist strict limitations to this process due to the use of carbon black nodules either alone or in addition to granulated quartzs linked to sucrose, both relating to environmental pollution from the nodulizing process (very irritating carbon black dust), and to the physical and mechanical behavior of such

nodules in the arc furnace. In all cases, the duration time of each test never exceeded 2.5 days with an output from the 100 kW furnace of approximately 5 kg/hour. Moreover, it is necessary to use purified graphite electrodes of very high cost, because the electrodes, in their consumption process, may be a source of chemical contamination of the resulting metallic silicon.

Still another patent suggests the use, as the raw material, of rice chaff as suitably washed and leached with acids, carbonized , and corrected chemically, so as to yield the appropriate stoichiometric $SiO_2$ and C mixture to produce metallic silicon, by direct carbothermal reduction in submerged arc furnaces, intended for solar applications, re. European Patent Application No. 23300 of 23.3.1979 Int. $Cl^3$ C01B 33/02; H01L31/00.

Even more recent is a comparable process proposed by L.P. Hunt et al. (Proc. of 4th Symp. on Mat. and New Proc. Tech. for Phot., PV-83-11, (1983) published by The Electrochemical Soc. Inc., Pennington, N.J., p. 106).

Both of the latter two processes involve, however, expensive preparation of the raw materials, which cannot be used directly as they are supplied.

In view of the foregoing situation, it is the general object of this invention to obtain metallic silicon, particularly for use in the manufacture of photovoltaic devices, by the carbothermal reduction of high purity quartzs (having a B content $\leqslant$

1 ppmw and a P content $\leqslant$ 5 ppmw), with overall production costs which are lower than those of the conventional process.

Another object is to have an emission of gas from the submerged arc furnace which, related to the yield in silicon, is one third less than that of the conventional process.

Still another object is to lower the rate of consumption of the submerged arc furnace 's electrodes by one third over the conventional process.

A further object is to avoid the use of powder raw material agglomerates in a submerged arc furnace.

These and other objects are achieved by a process, according to the invention, for producing metallic silicon particularly for use in the manufacture of photovoltaic devices, comprising the step of reducing silica in the form of either quartz or quartzite by means of a carbonaceous reducer in a high temperature submerged arc furnace, characterized in that said carbonaceous reducer is silicon carbide.

The silicon carbide employed in the inventive process is of a special type obtained by means of electric resistance furnaces of the Acheson type through the use of siliceous sands and carbon black of a purity compatible with the metallic silicon to be obtained in accordance with the general object of this invention. Such prime materials may be used without subjecting them to any agglomeration operation, because the broad reaction surface enables the gas

0177894

rate of emission to be lowered. More specifically, powders may be used which have a smaller granulometry than 1 mm. This agglomeration may be carried out with various techniques which always include a binder of an organic nature (sucrose, starch, molasses, polyvinyl alcohol, etc.) or inorganic nature (sodium silicate), preferably of an organic nature, and still more preferably sucrose, in order to minimize contamination of the chemical character.

The viable agglomeration techniques are: nodulizing, extruding, briquetting, and tablet making; of these, extrusion and briquetting are to be preferred as being substantially technically simpler and more reliable. With pelletization and extrusion, the obtained agglomerates must be dried with hot air at a temperature in the range of 100° to 150°C, preferably of 120°C.

Temperatures below 100°C extend excessively the drying time, whilst temperatures above 150°C cause the carbon black to burn. The drying time may be calculated each time so as to eventually obtain agglomerates having a maximum moisture content of 4% by weight.

With briquetting and tablet making, instead, the drying process is unnecessary, agglomerates being yielded in this case which have a lower moisture content than 4% by weight.

The single-phase resistance furnace with variable voltage fixed electrodes for the manufacture of silicon carbide corresponds to a typical Acheson furnace

having a specific power, relatively to the gas emission surface, on the order of 2-3 W/$cm^2$ as against 30-40 W/$cm^2$ of a typical submerged arc reduction furnace for metallic silicon.

The silicon carbide yielded by this method has a tetrahedral microcrystalline structure and is specially reactive to the submerged arc furnace in that it is much more porous (i.e. has a broader specific surface) than that yielded by ordinary carbonaceous reducers, such as for example petroleum coke. It is also highly brittle mechanically, and accordingly, eminently suitable for use as the raw material according to the process of this invention, without undergoing any special crushing treatments.

A particularly interesting aspect of the process according to the invention, with respect to the prior ones, is that of being able to realize chemical purification of the silicon carbide carried out directly in the electric furnace in the course of the production itself, by the addition , to the mixture of reaction raw materials, of particular substances (e.g. sodium chloride) or by blowing in reactive gases (e.g. chlorine) through the reaction furnace in order to react the chemical impurities present in the raw materials and form volatile compounds (e.g. chlorides) which are thus removed from the reactive mass. Thus, it becomes possible to obtain a particularly pure silicon carbide (with B and P contents $\leqslant$ 3 and 10 ppmw, respectively), suitable to form the raw feed material for the next submerged arc furnace,

without requiring any additional purifying treatments downstream of the resistance furnace.

An even more interesting aspect of the process according to the invention, resides in the fact that the production of silicon carbide occurs in the electric furnace without electrode consumption. This enables an important source of pollution to be eliminated, while enabling the use of not highly pure electrodes (and hence, electrodes of low cost), with interesting savings in the process cost.

As a matter of fact, the inventive process allows the use of graphite electrodes having an ash content of $\geqslant$ 0.5% by weight.

The ratio by weight of siliceous sand to carbon black is such as to allow the following chemical reaction to proceed:

$$SiO_2 + 3C \longrightarrow SiC + 2CO \qquad (1)$$

which takes place at temperatures in the 1800° to 2000°C range. Where agglomerates are used which contain sucrose as the binder, its by-weight content should be in the 10 to 20%, and preferably in the 10 to 15%, range.

Higher sucrose amounts than 20% by weight are to be regarded as too expensive, and lower amounts than 10% by weight fail to impart adequate mechanical characteristics to the raw feed material for handling both prior to being fed into the electric furnace and while being processed in the furnace itself.

The silicon carbide, obtained with the method

0177894

just described, constitutes the reducer for use in the next submerged arc furnace according to the inventive method.

The basic chemical reaction in the process is the following:

$$SiO_2 + 2SiC \longrightarrow 3Si + 2CO \qquad (2)$$

which is controlled, at the furnace conditions, by the two most important partial reactions which are supposed to take place inside and across the walls of the natural reaction chamber that forms around each electrode, namely:

$$2SiO + 2SiC \longrightarrow 4Si + 2CO \qquad (3)$$

$$SiO_2 + Si \longrightarrow 2SiO \qquad (4)$$

Above the roof of the reaction chambers, it is also likely that a direct reaction occurs between $SiO_2$ and SiC (there being no metallic silicon in this region), in accordance with the following equation:

$$2SiO_2 + SiC \longrightarrow 3SiO + CO \qquad (5)$$

the gaseous products thus formed could condensate again in the uppermost region (wherein temperatures are lower) according to the following reactions:

$$SiO + CO \longrightarrow SiO_2 + C \qquad (6)$$

$$3SiO + CO \longrightarrow SiC + 2SiO_2 \qquad (-5)$$

and the condensates $SiO_2$ and SiC are returned to the cycle according to the reactions (3),(4), and (5).

Any free carbon present, as originating from the reaction (6), may be used up in the following reactions:

$$SiO_2 + C \longrightarrow SiO + CO \qquad (7)$$

$$SiO + 2C \longrightarrow SiC + CO \qquad (8)$$

0177894

All these chemical reactions, which lead eventually to the production of metallic silicon, occur within a submerged arc furnace with three, two or a single electrode as usually employed in the production of ferro-alloys. Such furnace types operate on low voltage and high current, the power in said furnaces being controlled by shifting the electrodes in the vertical direction. A utilizable furnace may operate on either direct or alternate, single-phase or three-phase, current, preferably on single-phase alternated current AC (since such a current is more readily available) with a single electrode, and this in order to form, within the furnace and around the electrode itself, a single "reaction chamber", said reaction chamber being the region wherein the reactions (3) and (4) take place. This affords a better control of the furnace running conditions, while creating improved global conditions, or more easily, a condition of chemical equilibrium for all the chemical reaction described hereinabove.

According to the process of the invention, said submerged arc furnaces are fed with mixtures comprising rock quartzs of high chemical purity and silicon carbide of the type specified above, the size whereof would depend on the power rating of the submerged arc furnace being used, to obtain metallic silicon of a high chemical purity suitable for use in the photovoltaic industry, and while obtaining a gas emission and electrode consumption rate reduced by one third, with respect to the silicon yield, when compared with

that to be obtained with prior quartz carbo-reduction methods using any other types of carbonaceous reducer.

As may be appreciated from the reactions just described, the one which controls the reduction efficiency is above all the (3), wherein there are formed two parts silicon for each part silicon carbide which reacts with another part of silicon monoxide; it is apparent, therefore, that in this condition, the reaction (3) and hence the reduction efficiency will be more favored the higher is the contact surface of SiC with SiO. The silicon carbide yielded by the process of this invention lends itself particularly well for the intended object since it is highly porous and has a microcrystalline structure.

In the energy balance, the electric energy required for producing metallic silicon in accordance with the inventive process exceeds that of the conventional process by an amount equal to the heat contents of silicon carbide at 1600°C, which is approximately the equivalent of 0.52 kWh/kg metallic silicon produced. In practice, that difference is lessened by the improved thermal efficiency of the resistance furnace (as employed to prepare the silicon carbide) with respect to the submerged arc furnace.

The method according to this invention is characterized, anyhow, by a lower cost than prior methods owing mainly to the lower rate of electrode consumption and higher yield of the quartz reduction resulting from smaller losses of SiO to the submerged

arc furnace exhaust gases since the gas emission, relatively to the silicon yielded by the reaction (2), is decreased by one third over that of the conventional process which occurs in conformity with the following reaction:

$$SiO_2 + 2C \longrightarrow Si + 2CO \qquad (9)$$

This situation, which results in practice in having a gas volume which is one third less than that from a conventional carbothermal reduction process, makes the running of the submerged arc furnace far easier and more controllable, with substantial improvements in the workability of the furnace (melting bed) by the personnel in charge of such operations. The decreased volume of the gas released from the submerged arc furnace surface also reduces the losses of raw material due to the finer material being entrained by the gases and owing also to the less frequent occurrence of the so-called "blow-by's".

The running of the submerged arc furnace in these conditions ultimately affords less frequent manual operations, which greatly cuts down the likelihood of external contamination. In particular, the reduced electrode consumption and external intervention on the submerged arc furnace ensures an improved quality for the end product. It has been ascertained in particular that the electrodes should be fed at a lower rate than 70 kg electrode per ton silicon yield. At this electrode rate, both the objective of limiting the introduction of pollutants and that of reducing electrode consumption are achieved.

The following Example is given herein to further illustrate the operating procedures and the method according to the invention.

Example

3162 kg siliceous sand having the composition specified in Table I is agglomerated with 2028 kg carbon black having the composition shown in Table II and 810 kg refined purified sugar, according to the following procedure:

the three components of the mixture are first dry blended together, and then delivered into a pelletizing plate through a feed pipe, in turn fed from an auger. The pelletizing plate has a diameter of 1500 mm and is rotated at 18 rpm, has a rim on its outer circumference of 24 cm, and is tilted at 30° with respect to the vertical. Simultaneously with the feeding of the three component mixture into the pelletizing plate, demineralized water is supplied through a special sprinkler to enable the formation of nodules and at the same time dissolve all or some of the sugar present.

Thus, nodules are obtained having a diameter in the 5 to 15 mm range and containing a large amount of $H_2O$ which is to be removed before the nodules can be used in the manufacture of silicon carbide in the Acheson furnace. To this end, the nodules exiting the pelletizing plate are dried in a hot air kiln at about 120°C until a residual moisture content in the 2 to 4% range is achieved.

Eventually, about 6,000 kg nodules is obtained

wherein the ratio by weight of silica to fixed carbon is in the 1.5 to 1.65 range.

The raw materials so agglomerated are put into an electric resistance furnace of the Acheson type rated at 1500-2000 kW. After about 20 hours residence in said furnace, the latter is switched off and the reaction mass is allowed to cool down to 500-600°C. The furnace is then taken down to yield about 1500 kg of crystalline silicon carbide which, following appropriate crushing, can be used in the next processing step at the arc and resistance furnace.

The latter is a typical furnace for the reduction of ferro-alloys, rated at 240 kVA three-phase with three electrodes. The inner diameter of the basin is of about 1100 mm, and the diameter of the graphite electrodes is 175 mm with an ash content $\leqslant$ 200 ppmw.

After an appropriate furnace preheating step, it begins to be fed with mixtures comprising 40 kg SiC obtained with the process described above and whose chemical characteristics are specified in Table III, and 35 kg rock quartz whose composition is specified in Table IV.

The size of both the silicon carbide and quartz is in the 10 to 30 mm. At the start of the feed-in and until the furnace basin is filled up, there are added for each $SiC/SiO_2$ mixture as mentioned above, also 5 kg siliceous sand, of the same quality as used in the manufacture of the silicon carbide (see Table II),

which is spread against the basin walls. This operation is performed both in order to decrease the porosity of the melting roof and to form a protective layer for the silico-aluminous briquets used in the construction of the uppermost portion of the furnace basin inner wall, which could be attacked by the charge itself.

The electrical parameters used in the carbothermal reduction at the arc and resistance furnace are the following:

Phase-to-phase voltage: 60-70 V

Current: 1,600 A

Average power: 180 kW

Power factor: 0.95

The furnace is operated for about 5 days to yield about 1000 kg metallic silicon with a reduction yield of 73% and a specific consumption during the period of steady state running equal to 15 kWh/kg Si. The electrode consumption is about 25 kg/ton Si.

The chemical analysis of silicon appears in Table V.

Table I. Composition of the siliceous sand used

Impurity contents in ppm by weight

| | | |
|---|---|---|
| Al = 132.0 | Fe = 31.5 | Ti = 60.0 |
| B = 0.3 | Mg = 6.0 | V = 0.2 |
| Ca = 95.0 | Mn = 1.0 | Zr = 4.0 |
| Cr = 0.1 | Ni = 1.0 | $SiO_2$ = 99.9% |
| Cu = 0.6 | P = 3.0 | |

Table II. Composition of the carbon black used

Impurity contents in ppm by weight.

| | | |
|---|---|---|
| Al = 21.2 | Fe = 9.0 | Ti = 1.1 |
| B = 0.004 | Mg = 3.2 | V = 0.2 |
| Ca = 2.9 | Mn = 0.2 | Zr = 0.02 |
| Cr = 0.9 | Ni = 0.8 | Fixed carbon: 99.5% |
| Cu = 0.03 | P = 0.3 | |

Table III. Composition of the silicon carbide.

Impurity contents in ppm by weight.

| | | |
|---|---|---|
| Al = 25.0 | Fe = 16.2 | Ti = 44.7 |
| B = 2.8 | Mg = 7.8 | |
| Ca = 27.8 | P = 8.9 | |

Table IV. Composition of the quartz used in the F.A.

Impurity contents in ppm by weight.

| | | |
|---|---|---|
| Al = 42.0 | Fe = 300.0 | Ti = 6.0 |
| B = 0.3 | Mg = 1.9 | V = 0.1 |
| Ca = 90.0 | Mn = 0.5 | Zr = 0.2 |
| Cr = 0.9 | Ni = 0.1 | $SiO_2$ = 99.9% |
| Cu = 0.3 | P = 1.5 | |

Table V. Composition of the metallic silicon yielded.

Impurity contents in ppm by weight.

| | | |
|---|---|---|
| Al = 60.0 | Fe = 250.0 | Ti = 48.7 |
| B = 2.9 | Mg = 10.0 | |
| Ca = 98.5 | P = 6.3 | |

CLAIMS

1. A method of producing metallic silicon particularly for use in the manufacture of photovoltaic devices, comprising the step of reducing silica in the quartz or quartzite forms by means of a carbonaceous reducer in a high temperature submerged arc furnace, characterized in that said carbonaceous reducer is silicon carbide.

2. A method according to claim 1, characterized in that said silicon carbide is obtained in electric furnaces of the resistance type by using a mixture of siliceous sand and/or amorphous silica and/or quartz and/or quartzites, in ground form and having a high purity, with B and P contents $\leq$ 1 and 5 ppmw, respectively, and carbon black with B and P contents $\leq$ 0.05 and 0.5 ppmw, respectively.

3. A method according to claim 2, characterized in that said mixture has a lower granulometry than 1 mm.

4. A method according to claim 2, characterized in that said electric resistance furnaces employ graphite electrodes having an ash content $\geq$ 0.5% by weight.

5. A method according to either claim 1 or claim 2, characterized in that said silicon carbide has B and P contents $\leq$ 3 and 10 ppmw, respectively.

6. A method according to claim 1, characterized in that the electrode feeding rate is, throughout the process, less than 70 kg electrode per ton silicon produced.

7. A method according to any of the preceding claims, characterized in that it comprises the step of adding to said mixture, substances adapted to react with the impurities included in said mixture, to yield gaseous reaction products.

8. A method according to claim 7, characterized in that said substances adapted to react with said impurities are selected from solid sodium chloride with chlorine gas, and that said gaseous reaction products are the chlorides of said impurities.

9. Metallic silicon particularly for use in the manufacture of photovoltaic devices obtained by the method as disclosed and claimed herein.